# EUROPÄISCHE PATENTSCHRIFT

(11) **EP 0 601 591 B1**
(45) Veröffentlichungstag und Bekanntmachung des Hinweises auf die Patenterteilung: **28.08.1996**
(21) Anmeldenummer: 93119904.6
(22) Anmeldetag: 09.12.1993
(51) Int. Cl.: B62L 3/02, B62L 1/14, B62M 25/08

(54) **Hydraulische Betätigungseinrichtung für Bremsen und Schaltungen an Fahrrädern oder dergleichen**
Hydraulic actuating device for brakes and derailer gears on bicycles or the like
Dispositif de commande hydraulique pour freins et dérailleurs des bicyclettes ou des véhicules similaires

(30) Priorität: 10.12.1992 DE 4241521
(43) Veröffentlichungstag der Anmeldung: 15.06.1994
(73) Patentinhaber: FICHTEL & SACHS AG, D-97424 Schweinfurt (DE)
(72) Erfinder: Gajek, Joachim, D-97084 Würzburg (DE); Stumpf, Hannsjörg, D-97421 Schweinfurt (DE)
(74) Vertreter: Prechtel, Jörg, Dipl.-Phys. Dr.

(56) Entgegenhaltungen:
- EP-A- 0 596 335
- BE-A- 444 476
- FR-A- 2 575 991
- US-A- 4 633 726

## Beschreibung

Die Erfindung betrifft eine Kolben-Zylindereinheit für eine Druckfluid-Betätigungseinrichtung, wie sie im Oberbegriff des Anspruchs 1 angegeben ist.

Eine Druckfluid-Betätigungseinrichtung ist z.B. aus der französischen Patentanmeldung 85 00 480 (Veröffentlichungs-Nr. 2 575 991) bekannt. Bei dieser bekannten Betätigungseinrichtung ist ein Zylinderteil eines Nehmerzylinders direkt mit einem z.B. an einem Fahrradrahmen angelenkten ersten Bremshebelteil verbunden, und ein in dem Zylinderteil verschiebbar angeordnetes Kolbenteil ist direkt mit einem zweiten Bremshebelteil verbunden. Bei Betätigung eines Bremsgriffs wird durch Verschieben eines Kolbens in einem Geberzylinder ein Arbeitfluid unter Druck gesetzt und das unter Druck gesetzte Arbeitsfluid aus dem Geberzylinder abgegeben. Der Geberzylinder steht über eine Hydraulikdruckleitung mit einer Druckkammer im Nehmerzylinder in Verbindung, so daß das vom Geberzylinder angegebene Arbeitsfluid zu einer Zunahme der Arbeitsfluidmenge in der Druckkammer des Nehmerzylinders führt. Dabei wird durch den Druck des Arbeitsfluids in der Druckkammer des Nehmerzylinders der im Nehmerzylinder angeordnete Kolben verschoben, so daß sich die Gesamtlänge der Nehmerzylinder-Kolbenanordnung erhöht, wodurch die ersten und zweiten Bremshebelteile der Fahrradbremse zueinander verschwenkt werden und somit zu einer Bremswirkung führen.

Diese bekannte Betätigungseinrichtung weist jedoch den Nachteil auf, daß sie zur Kraftübertragung, z.B. auf die Bremshebelteile, lediglich durch Druckwirkung ausgebildet ist, und daß sie speziell für derartige Bremshebelteile ausgebildet ist. Zur Anwendung als Betätigungseinrichtung für andere zu betätigende Elemente muß diese Betätigungseinrichtung jeweils speziell baulich angepaßt werden, was zu hohen Herstellungskosten führt, die bei dem Massenprodukt Fahrradzubehör besonders ins Gewicht fallen.

Ferner ist aus der deutschen Offenlegungsschrift DE-A-33 03 586 eine Betätigungseinrichtung für Fahrradbremsen bekannt, bei welcher ein Nehmerzylinder wiederum zwischen zwei zum Beispiel an einem Fahrradrahmen angelenkten Bremshebelteilen angeordnet ist und bei welchen ein Erhöhen des Arbeitfluiddrucks in einer Druckkammer des Nehmerzylinders zu einer Vergrößerung der Gesamtlänge der Nehmerzylinder-Kolbeneinheit führt, so daß wiederum die Bremshebelteile verschwenkt werden und zur Bremswirkung führen. Auch bei dieser bekannten Einrichtung ist die Nehmerzylinder-Kolbeneinheit zur Anwendung bei Bremshebelteilen speziell ausgebildet. Für jegliche Anwendung bei anderen Bauelementen oder z.B. bei Bremshebelteilen verschiedener Hebelarmlänge, ist eine spezielle andere Ausbildungsart der Nehmerzylinder-Kolbeneinheit erforderlich, wodurch die Herstellungskosten für diese Einrichtung wiederum relativ hoch sind.

Aus der US-PS-4,633,726 ist ein hydraulisches Betätigungssystem für eine Motorradbremse und dergleichen bekannt, bei welchem über einen Geberzylinder ein Hydraulikdruck zu einem Nehmerzylinder abgegeben werden kann. Im Nehmerzylinder ist ein Kolben durch den Hydraulikdruck hin- und herbewegbar. Der Hydraulikkolben ist mit einer mit der zu betätigenden Einrichtung fest verbundenen Stange verbunden, welche einen Zylinderboden durchsetzt.

Es ist die Aufgabe der vorliegenden Erfindung, eine Kolben-Zylindereinheit für eine Druckfluid-Betätigungseinrichtung vorzusehen, welche ohne besondere Anpassungsmaßnahme zur Betätigung einer Vielzahl verschiedener, durch mechanische Krafteinwirkung zu betätigenden Einrichtungen einsetzbar ist, und bei welcher die Gefahr eines Funktionsmangels aufgrund von Einwirkungen von außen minimiert ist. Erfindungsgemäß wird diese Aufgabe durch die im Anspruch 1 angegebene Kolben-Zylindereinheit für eine Druckfluid-Betätigungseinrichtung gelöst.

Gemäß dem Anspruch 1 ist, eine Kolben-Zylindereinheit für eine Druckfluid-Betätigungseinrichtung, insbesondere an Zweirädern, zur Abgabe eines unter Druck stehenden Fluids aufgrund einer Relativbewegung zweier manuell betätigbarer Bauelemente, insbesondere der Druckfluid-Betätigungseinrichtung, oder zur Aufnahme dieses Fluids und mechanischen Betätigung zweier relativ zueinander zu bewegender Bauelemente, insbesondere des Zweirads, vorgesehen, umfassend ein Zylindergehäuseteil mit einer eine Zylinderlängsachse festlegenden Zylinderausnehmung, wobei die Zylinderausnehmung an einem ihrer axialen Enden durch einen Zylinderboden abgeschlossen ist, einen in der Zylinderausnehmung axial verschiebbaren Kolben, eine zwischen einer dem Zylinderboden zugewandten Stirnseite des Kolbens und dem Zylinderboden gebildete Druckkammer, und eine in die Druckkammer mündende Hydraulikdruckleitung zum Zuführen von Arbeitsfluid in die Druckkammer und zum Ablassen von Arbeitsfluid aus der Druckkammer, wobei das Zylindergehäuseteil mit einem ersten der beiden Bauelemente betriebsmäßig verbindbar ist, und der Kolben mit einem zweiten der beiden Bauelemente betriebsmäßig verbindbar ist.

Der Kolben weist parallel zur Zylinderlängsachse eine zum Zylinderboden hin offene Innenausnehmung auf, welche an einem vom Zylinderboden abgewandten Ende der Innenausnehmung durch einen Kolbenboden des Kolbens abgeschlossen ist. Am Zylinderboden ist ein zur Zylinderlängsachse paralleles Führungselement mit einem über den Zylinderboden vorstehenden und in die Innenausnehmung hineinragenden Führungsabschnitt angeordnet, wobei die Abmessung des Führungsabschnitts parallel zur Zylinderlängsachse größer ist, als ein maximaler Hub des Kolbens in der Zylinderausnehmung. Ferner sind das Führungselement und den Zylinderboden durchsetzende, miteinander fluchtende Durchgangsöffnungen vorgesehen, wobei die Durchgangsöffnungen von einem mit dem Kolben einerseits und dem zweiten Bauelement andererseits verbundenen Zugelement durchsetzt sind.

Durch die spezielle Ausgestaltung der erfindungsgemäßen Kolben-Zylindereinheit ist es möglich, diese über das Zylindergehäuseteil einerseits und das mit dem Kolben verbundene Zugelement andererseits mit den jeweiligen Bauelementen der zu betätigenden Einrichtung zu koppeln, wobei die Kolben-Zylindereinheit wiederum nicht speziell für eine bestimmte zu betätigende Einrichtung ausgebildet sein muß, sondern bei einer Vielzahl verschiedener Einrichtungen anwendbar ist. Viele dieser Einrichtungen, wie z.B. Bremsen und Schaltungen, sind üblicherweise von vorneherein zur Betätigung durch ein Zugelement, insbesondere Bowdenzugelement, ausgelegt, so daß lediglich die Bowdenzugseele am Kolben festzulegen ist mit einfacher Abstützung des Zylindergehäuseteils am Halterungsteil für den Bowdenzugmantel. Dies ermöglicht die Herstellung der erfindungsgemäßen Kolben-Zylindereinheit in einer großen Stückzahl, so daß die Herstellungskosten der Einheiten deutlich verringert werden können. Hierzu trägt auch die Verwendungsmöglichkeit der erfindungsgemäßen Kolben-Zylindereinheit als Fluiddruck erzeugendes Element bei.

In besonders einfacher Weise kann der Kolben mit dem zweiten Bauelement durch ein Zugseil verbunden werden.

Wenn der Kolbenboden eine mit der Durchgangsöffnung im Führungselement fluchtende Durchgangsöffnung aufweist, und wenn die Durchgangsöffnung im Kolben auf einer vom Zylinderboden abgewandten Stirnseite des Kolbens einen Abschnitt mit vergrößertem Durchmesser aufweist und ein mit dem Kolben gekoppeltes Ende des Zugelements einen Abschnitt vergrößerten Durchmessers aufweist, welcher wenigstens teilweise in dem Abschnitt vergrößerten Durchmessers der Durchgangsöffnung im Kolbenboden angeordnet ist, kann das Zugseil in einfacher Weise mit dem Kolben gekoppelt werden, wobei durch die spezielle Art der Kopplung das Zugseil relativ zum Kolben frei drehbar ist, so daß im Zugseil keine Torsionskräfte aufgebaut werden können, welche die Funktionsfähigkeit der Kolben-Zylindereinheit beeinflussen könnten.

Eine besonders stabile Ausgestaltung des Zylindergehäuseteils mit dem Führungselement kann dadurch erhalten werden, daß das Führungselement mit einem wenigstens einen Teil des Zylinderbodens bildenden Bodenabschnitt einteilig ausgebildet ist. Dabei ist es vorteilhaft, wenn im Zylinderboden eine Öffnung mit Innengewinde vorgesehen ist und am Bodenabschnitt ein Außengewinde zum Einschrauben des Bodenabschnitts in das Gehäuseteil vorgesehen ist. Das Zylindergehäuseteil und das Führungselement mit dem Zylinderboden können dann als separate Teile hergestellt werden und auf einfache Weise zusammengesetzt werden. Insbesondere ist es dabei möglich, das Führungselement mit dem Bodenabschnitt und das Zylindergehäuseteil aus verschiedenen Materialien herzustellen, welche dann jeweils an die spezielle Krafteinwirkung auf die beiden Bauteile angepaßt sind.

Um bei zweiteiliger Ausführung des Zylindergehäuseteils und des Führungselements mit dem Bodenabschnitt diese bei der Montage in einer definierten Position relativ zueinander anordnen zu können, wird vorgeschlagen, daß an dem Bodenabschnitt ein sich radial nach außen erstreckender Einschraubbegrenzungsanschlag vorgesehen ist.

Zur Kopplung des Zylindergehäuseteils mit dem ersten Bauelement wird vorgeschlagen, daß an einer Außenseite des Zylinderbodens ein Anschlußelement vorgesehen ist.

Vorzugsweise umfaßt das Anschlußelement seinen sich in Richtung der Zylinderlängsachse erstreckenden Ansatz, welcher eine mit der Durchgangsöffnung im Zylinderboden fluchtende Durchgangsöffnung aufweist, wobei dann das Zugelement die Durchgangsöffnung des Anschlußelements durchsetzt und direkt mit dem zweiten Bauelement gekoppelt ist. Die zur Betätigung des ersten und des zweiten Bauelements von der erfindungsgemäßen Kolben-Zylindereinheit abgegebene Kraft wird somit über das Zugelement und das dieses im wesentlichen konzentrisch umgebende Anschlußelement abgegeben, so daß keine Hebelwirkung zwischen dem Zugelement und dem Anschlußelement aufgebaut wird, welche möglicherweise zu einem Verkippen oder einer seitlichen Krafteinwirkung auf die Kolben-Zylindereinheit führen könnte.

Ein besonders stabile Ausgestaltung kann wieder dadurch erreicht werden, daß das Anschlußelement mit dem Zylinderboden einteilig ausgebildet ist.

Zur (indirekten) Kopplung der Kolben-Zylindereinheit jeweils mit dem ersten und zweiten Bauelement, wird vorgeschlagen, daß ein Bowdenzug-Mantelteil am Anschlußelement mit einem seiner Enden festgelegt ist und am ersten Bauelement mit seinem anderen Ende festgelegt ist, und daß das Zugelement das Bowdenzug-Mantelteil durchsetzt und eine Bowdenzugseele bildet. Durch die Bowdenzugverbindung ist eine Anbringung der erfindungsgemäßen Kolben-Zylindereinheit auch entfernt von den ersten und zweiten Bauelementen möglich. Die Kolben-Zylindereinheit kann somit an einem Ort untergebracht werden, an dem sie einerseits das optische Erscheinungsbild und andererseits die Funktionalität des Fahrrads oder dergl. am wenigstens beeinträchtigt.

Alternativ dazu ist es möglich, das Zylindergehäuseteil mittels des Anschlußelements am ersten Bauelement in einer Stecköffnung an einem Befestigungsabschnitt des ersten Bauelements steckbar zu lagern, wobei das erste Bauelement an einem Steckanschlag im Bereich des Zylinderbodens anliegt. Dies sieht eine einfache Art der direkten Kopplung des Gehäuseteils mit dem ersten Bauelement vor, wobei aufgrund der Zugbelastung der erfindungsgemäßen Kolben-Zylindereinheit das Gehäuseteil stets fest in der Stecköffnung am Befestigungsabschnitt gehalten ist.

Ferner ist es möglich, am Anschlußelement ein Außengewinde vorzusehen, und an einem Befestigungsabschnitt des ersten Bauelements eine Öffnung mit Innengewinde zur Schraubverbindung des Anschlußelements mit dem ersten Bauelement vorzusehen. Das Zylindergehäuseteil kann somit über das Anschlußelement fest mit dem ersten Bauelement gekoppelt werden, wobei aufgrund der Gewindeverbindung des ersten Bauelements mit dem Zylindergehäuseteil durch entsprechendes Drehen des Zylindergehäuseteils im Innengewinde des ersten Bauelements die relative Lage dieser beiden Elemente zueinander eingestellt werden kann, und somit auch eine einfache Justage der ersten und zweiten Bauelemente zueinander vorgenommen werden kann.

Um beim Ablassen des Arbeitsfluids aus der im Zylindergehäuseteil gebildeten Druckkammer sicherzustellen, daß stets ein Restvolumen erhalten bleibt, in welches bei nachfolgender Betätigung das Arbeitsfluid wieder eingespeist werden kann und somit die Druckwirkung des Zylinders von Anfang an ausreichend groß ist, wird vorgeschlagen, daß an der dem Zylinderboden zugewandten Stirnseite des Kolbens und/oder am Zylinderboden ein die Innenausnehmung im Kolben umgebender, sich von der Stirnseite des Kolbens axial erstreckender Ringvorsprung vorgesehen ist.

Alternativ dazu ist es möglich, den Führungsabschnitt derart auszubilden, daß er eine Abmessung parallel zur Zylinderlängsachse aufweist, die größer ist, als die axiale Abmessung der Innenausnehmung im Kolben. Somit kann bei Abgabe des Arbeitsfluids aus der Druckkammer der Kolben sich lediglich soweit in Richtung des Zylinderbodens bewegen, bis das Führungselement am Kolbenboden anstößt, so daß auch in diesem Fall ein Restvolumen zum nachfolgenden Einleiten des Arbeitsfluids vorhanden bleibt.

Um ein Austreten des Arbeitsfluids zwischen dem Kolben und dem Zylindergehäuseteil zu vermeiden, wird vorgeschlagen, daß in einer Außenumfangsfläche des Kolbens eine in Umfangsrichtung verlaufende Nut zur Aufnahme eines ersten Dichtungselements vorgesehen ist.

Um ferner ein Austreten des Arbeitsfluids zwischen dem Kolben und dem Führungselement und durch die jeweiligen Durchgangsöffnungen zu verhindern, wird vorgeschlagen, daß in einer Innenumfangsfläche der Innenausnehmung im Kolben und/oder in einer Außenumfangsfläche des Führungselements eine in Umfangsrichtung verlaufende Nut zur Aufnahme eines zweiten Dichtungselements vorgesehen ist. Die Dichtung zwischen dem Führungselement und dem Kolben stellt dabei sicher, daß in jeder axial verschobenen Position des Kolbens der Austritt von Arbeitsfluid durch die Durchgangsöffnugnen verhindert werden kann.

Um zu verhindern, daß bei einer übermäßigen Zufuhr von Arbeitsfluid in die Druckkammer der Kolben sich aus dem Zylindergehäuseteil heraus verschiebt und der Führungsabschnitt immer wenigstens teilweise in der Innenausnehmung des Kolbens bleibt, wird vorgeschlagen, daß im Bereich eines offenen Endes der Zylinderausnehmung im Zylindergehäuseteil ein Hubbegrenzungselement für den Kolben vorgesehen ist.

Dazu kann in einer Innenumfangsfläche der Zylinderausnehmung im Zylindergehäuseteil im Bereich des offenen Endes der Zylinderausnehmung eine in Umfangsrichtung verlaufende Nut zur Aufnahme eines Sprengrings vorgesehen sein. Der Sprengring kann bei der Montage der erfindungsgemäßen Kolben-Zylindereinheit nach dem Einsetzen des Kolbens in das Zylindergehäuseteil in einfacher Weise in die Innenumfangsfläche eingesetzt werden und kann nachfolgend, z.B. zur Wartung der Kolben-Zylindereinheit, wieder aus der Nut entfernt werden, um den Kolben aus dem Zylindergehäuseteil entnehmen zu können.

Die Erfindung betrifft ferner die Verwendung der Zylinder-Kolbeneinheit bei einer hydraulischen Betätigungseinrichtung, insbesondere an Zweirädern, zur Betätigung zweier relativ zueinander zu bewegender Bauelemente, insbesondere einer Bremse oder einer Schaltung.

Die Erfindung wird nachfolgend an bevorzugten Ausführungsbeispielen anhand der Zeichnungen detailliert beschrieben. Es zeigt:
- Fig. 1: einen schematischen Längsschnitt durch eine erfindungsgemäße hydraulische Betätigungseinrichtung entlang einer Linie II-II in Fig. 2;
- Fig. 2: einen Querschnitt durch einen erfindungsgemäßen Nehmerzylinder entlang einer Linie I-I in Fig. 1;
- Fig. 3: die Anwendung des erfindungsgemäßen Nehmerzylinders bei einer Fahrradbremse;
- Fig. 4: die Anwendung des erfindungsgemäßen Nehmerzylinders bei einer Kettenschaltung; und
- Fig. 5: einen der Fig. 1 entsprechenden Längsschnitt einer zweiten Ausführungsform des erfindungsgemäßen Nehmerzylinders.

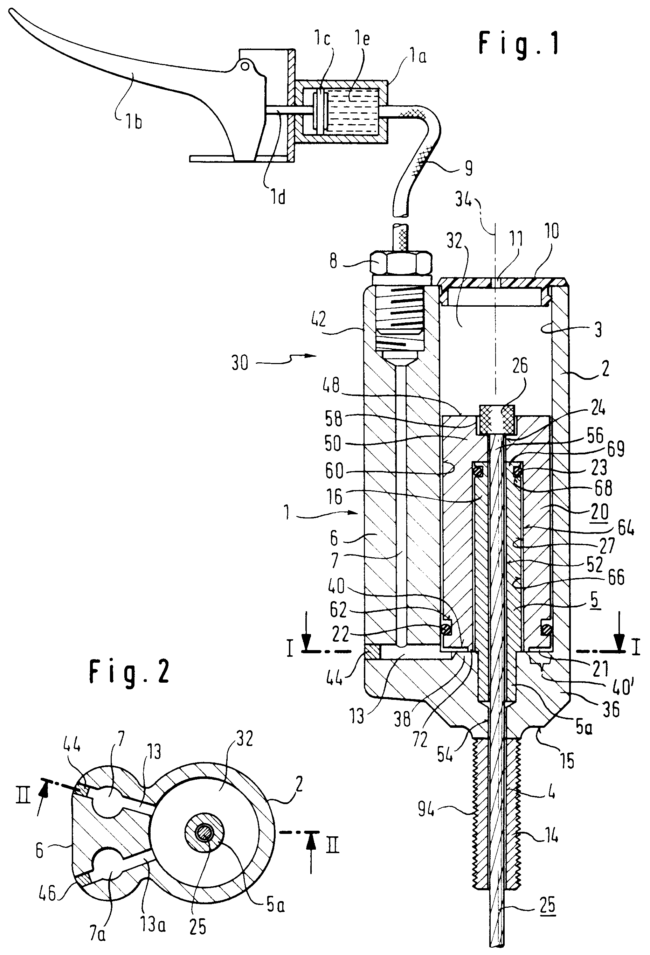

In Fig. 1 ist eine erfindungsgemäße hydraulische Betätigungseinrichtung 30 teilweise schematisch dargestellt. Die Betätigungseinrichtung 30 umfaßt einen Betätigungshebel 1b, welcher z.B. ein im Griffbereich einer Fahrradlenkstange angebrachter Bremshebel sein kann, sowie einen Geberzylinder 1a, in dem ein Kolben 1c verschiebbar angeordnet ist. Dabei ist der Kolben 1c durch eine Kolbenstange 1d mit dem Betätigungshebel 1b verbunden, so daß durch Betätigung des Betätigungshebels 1b der Kolben 1c im Zylinder 1a mit gleichzeitiger Vergrößerung oder Verkleinerung des Volumens einer Druckkammer 1e verschoben wird. Die Druckkammer 1e des Zylinders 1a ist mit Arbeitsfluid gefüllt.

Bei der in Fig. 1 dargestellten hydraulischen Betätigungseinrichtung dient der Zylinder 1a als ein Geberzylinder, welcher bei Betätigung des Betätigungshebels 1b unter Druck stehendes Arbeitsfluid über eine flexible Druckleitung 9 zu einem Nehmerzylinder 1 abgibt.

Der Nehmerzylinder 1 umfaßt ein Zylindergehäuseteil 2, in welchem eine in Richtung einer Zylinderlängsachse 34 langgestreckte Zylinderausnehmung 32 vorgesehen ist. Die Zylinderausnehmung 32 ist an einem axialen Ende 36 des Zylindergehäuseteils 2 durch einen Zylinderboden 38 abgeschlossen. In der Zylinderausnehmung 32 ist ein Kolben 20 in Achsrichtung verschiebbar angeordnet. Zwischen einer dem Zylinderboden 38 zugewandten Stirnseite 40 des Kolbens 20 und dem Zylinderboden 38 ist eine Druckkammer 21 vorgesehen, in welche ein durch Bohrungen 7 und 13 in einem Zuleitungsgehäuseteil 6 gebildeter Fluidzuführkanal mündet. Die Bohrung 7 ist im Zylindergehäuseteil 2 derart angeordnet, daß sie sich im wesentlichen parallel zur Zylinderausnehmung 32 erstreckt, wobei an einem dem Kolbenboden 38 entgegengesetzten Ende 42 des Zylindergehäuseteils 2 ein Verbindungselement 8 zur Verbindung der Druckleitung 9 mit dem Fluidzuführkanal 7,3 angeordnet ist.

Durch die mit einander in Verbindung stehenden Bohrungen 7 und 13 kann in einfacher Weise ein Fluidzuführkanal vorgesehen werden, wobei dann die Bohrung 13, welche sich, wie insbesondere in Fig. 2 zu erkennen ist, im wesentlichen radial von der Zylinderausnehmung 32 weg erstreckt, nach außen hin durch einen Pfropfen 44 verschlossen ist.

Entsprechend den Bohrungen 7,13 sind Bohrungen 7a,13a vorgesehen, wobei die Bohrung 13a nach außen hin wiederum durch einen Pfropfen 46 verschlossen ist. Die Bohrungen 7a,13a bilden einen in die Druckkammer 21 mündenden Entlüftungskanal, welcher im Bereich des Endes 42 des Zylindergehäuseteils 2 zum Beispiel durch eine Entlüftungsschraube (in den Fig. nicht erkennbar) verschlossen ist.

Am Zylinderboden 38 ist ein Führungselement 5 derart angebracht, daß es sich mit einem Führungsabschnitt 16 parallel zur Längsachse 34 in die Zylinderausnehmung 32 erstreckt. Im Kolben 20 ist eine Innenausnehmung 27 vorgesehen, welche zu der dem Zylinderboden 38 gegenüberliegenden Stirnseite 40 des Kolbens 20 offen ist. An einem vom Zylinderboden 38 abgewandten Ende der Innenausnehmung 27 ist diese durch einen Kolbenboden 50 abgeschlossen. Der Querschnitt der Innenausnehmung 27 entspricht im wesentlichen dem Querschnitt des Führungselements 5, und das Führungselement 5 erstreckt sich wenigstens teilweise in die Innenausnehmung 27.

Im Kolbenboden 50, im Führungselement 5 und im Zylinderboden 38 sind Durchgangsöffnungen 24,52 und 54 in Richtung der Längsachse 34 zueinander fluchtend angeordnet. Die Durchgangsöffnungen 24,52 und 54 sind von einem Zugelement, z.B. einem Zugseil 25, durchsetzt. Das Zugseil 25 weist an einem Ende 56 einen Abschnitt 26 mit vergrößertem Durchmesser auf, z.B. einen Nippel 26, welcher in einer entsprechenden Vertiefung 58 im Kolbenboden 50 angeordnet ist. Das Zugseil 25 dient zur nachfolgend noch detaillierter beschriebenen Kopplung des Kolbens 20 mit einer zu betätigenden Einrichtung.

Ferner ist am Zylinderboden 38 ein Ansatz 14 mit einer Durchgangsöffnung 4 an der der Zylinderausnehmung 32 entgegengesetzten Seite des Zylinderbodens 38 derart angeordnet, daß er das Zugseil 25 umgibt. Der Ansatz 14 dient in einer noch zu beschreibenden Art und Weise ebenfalls zur Kopplung mit der zu betätigenden Einrichtung.

Um ein Austreten des Arbeitsfluids aus der Druckkammer 21 zwischen einer Außenumfangsfläche 60 des Kolbens 20 und einer Innenumfangsfläche 3 der Zylinderausnehmung 32 zu verhindern, ist in der Außenumfangsfläche 60 des Kolbens 20 eine Umfangsnut 62 vorgesehen, in welcher ein Dichtungselement, z.B. ein elastischer Dichtungsring 22, angeordnet ist. Der Dichtungsring 22 stellt einen dichten Abschluß zwischen der Außenumfangsfläche 60 des Kolbens 20 und der Innenumfangsfläche 3 der Zylinderausnehmung 32 sicher.

Um ferner ein Austreten des Arbeitsfluids zwischen einer Innenumfangsfläche 64 der Innenausnehmung 27 und einer Außenumfangsfläche 66 des Führungselements 5 und durch die Durchgangsöffnungen 52,54 und 4 zu verhindern, ist in der Außenumfangsfläche 66 des Führungselements 5 eine Umfangsnut 68 vorgesehen, in welcher ein Dichtungselement, z.B. ein elastischer Dichtungsring 23, angeordnet ist.

Bei Betätigung des Betätigungshebels 1b und entsprechender Arbeitsfluidabgabe des Geberzylinders 1a wird aufgrund des Druckanstiegs in der Druckleitung 9 und dem Fluidzuführkanal 7,13 Arbeitsfluid in die Druckkammer 21 im Nehmerzylinder 1 eingeleitet. Dadurch wird eine axiale Verschiebung des Kolbens 20 in Richtung des Endes 42 des Zylindergehäuseteils 2 bewirkt mit gleichzeitiger axialer Verschiebung des Zugseils 25. Das Zugseil 25 bewegt sich somit axial relativ zum Ansatz 14, und diese Relativbewegung wird in einer nachfolgend beschriebenen Art und Weise zur Betätigung zweier sich relativ zueinander bewegender Bauelemente der zu betätigenden Einrichtung ausgenutzt.

Der Dichtungsring 23 am Führungselement 5 stellt dabei in jeder axialen Stellung des Kolbens 20 in der Zylinderausnehmung 32 einen dichten Abschluß der Druckkammer zu den Durchgangsöffnungen 52,54 und 4 sicher. Dazu ist es erforderlich, daß die Länge des sich in die Innenausnehmung 27 erstreckenden Abschnitts des Führungselements 5 größer ist, als der maximale Hub des Kolbens 20 in der Zylinderausnehmung 32, und daß der Dichtungsring 23 so nahe wie möglich an dem vom Kolbenboden 38 entfernten Ende 69 des Führungselements 5 angeordnet ist. Bei Freigabe des Betätigungshebels 1b wird der Kolben, z.B. unter Vorspannung einer nicht dargestellten Feder, wieder in Richtung des Zylinderbodens 38 bewegt, wobei ein die Innenausnehmung 27 im Kolben 20 umgebender Ringvorsprung 72 an der Stirnseite 40 des Kolbens 20 verhindert, daß die Stirnseite 40 ganzflächig zur Anlage am Zylinderboden 38 kommt. Somit wird bei einer nachfolgenden Betätigung durch den Betätigungshebel 1b das in die Druckkammer 21 eingeleitete Fluid gleichmäßig über die gesamte Oberfläche der Stirnseite 40 des Kolbens 20 verteilt und wirkt somit vom Anfang der Einleitung des Arbeitsfluids in die Druckkammer 21 an auf eine gleichbleibende Fläche.

Wie in Fig. 1 ferner zu erkennen ist, weist das Führungselement 5 einen Endabschnitt 5a auf, welcher in eine entsprechende Ausnehmung im Zylinderboden eingeführt ist und in dieser Ausnehmung, z.B. durch Verkleben, Verlöten oder dergleichen, festgelegt ist.

Im Bereich des Endes 42 des Zylindergehäuseteils 2 ist die Zylinderausnehmung 32 durch einen Deckel 10 verschlossen. Der Deckel 10 verhindert, daß Schmutz und Staub in das Innere der Zylinderausnehmung 32 gelangt und somit die freie Bewegung des Kolbens 20 der Zylinderausnehmung 32 behindern. Im Deckel 10 ist eine Öffnung 11 vorgesehen, durch welche bei einer Bewegung des Kolbens 20 in Richtung des Endes 42 Luft ausströmen kann. Somit wird verhindert, daß sich zwischen dem Kolben 20 und dem Deckel 10 bei einer Bewegung des Kolbens 20 in Richtung des Endes 42 ein übermäßiger Druck aufbaut, welcher die Funktionsfähigkeit des Nehmerzylinders 1 beeinträchtigen würde.

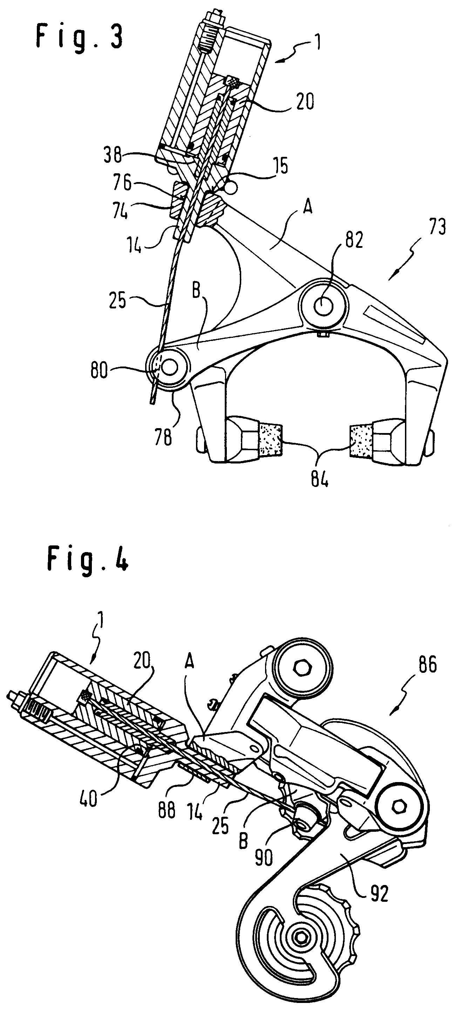

In den Fig. 3 und 4 sind jeweils Beispiele der Anwendung des erfindungsgemäßen Nehmerzylinders dargestellt. In Fig. 3 ist der Nehmerzylinder 1 bei einer Felgenbremse 73 für ein Fahrrad angewandt. Derartige Felgenbremsen sind im Stand der Technik bekannt, und eine detaillierte Beschreibung derselben wird hier weggelassen. Ein erster Bremshebelarm A der Felgenbremse 73 weist einen Befestigungsabschnitt 74 mit einer Durchgangsöffnung 76 auf. In die Durchgangsöffnung 76 ist der Nehmerzylinder 1 mit seinem Ansatz 14 eingeschoben und liegt mit einem Steckanschlag 15 am Befestigungsabschnitt 74 des Bremshebelarms A an. Die relative Lage des Nehmerzylinders 1 zum Bremshebelarm A kann z.B. durch Beilagscheiben (nicht dargestellt) zwischen dem Steckanschlag 15 und dem Befestigungsabschnitt 74 eingestellt werden.

Ein zweiter Bremshebelarm B weist einen zweiten Befestigungsabschnitt 78 auf, an dem z.B. durch eine Klemmschraube 80 das Zugseil 25 festgeklemmt ist. Bei Betätigung des Betätigungshebels 1b und der damit verbundenen Bewegung des Kolbens 20 weg vom Zylinderboden 38 werden aufgrund der Relativbewegung zwischen dem Ansatz 14 und dem Zugseil 25 die beiden Befestigungsabschnitte 74,78 der Bremshebelarme A,B aufeinander zu bewegt, wodurch die Bremshebelarme A,B um eine Schwenkachse 82 verschwenkt werden und Bremsbacken 84 zur Anlage an einer nicht dargestellten Felge kommen. Die zwischen der Felge und den Bremsbacken 84 entwickelte Reibungskraft führt dann zum Abbremsen.

Durch geeignete Auswahl des Verhältnisses der Innenquerschnittsfläche des Zylinders 1a zu einer Kolbenringfläche 40' (= Fläche der Stirnseite 40 abzüglich der Querschnittsfläche der Innenausnehmung 27) ist es möglich, die durch den Betätigungshebel 1b in den Zylinder 1a eingeleitete Kraft zu verstärken. Dazu muß die Kolbenringfläche 40' größer sein, als die Querschnittsfläche des Kolbens 1c im Zylinder 1a. Dabei wird zwar bei Betätigung des Betätigungshebels 1b der Hub des Kolbens 20 geringer sein, als der Hub des Kolbens 1c, derartige Felgenbremsen erfordern jedoch keinen großen Hub bzw. keine große Schwenkbewegung der Bremshebelarme A,B.

In Fig. 4 ist der erfindungsgemäße Nehmerzylinder bei einem Kettenumwerfer 86 einer Kettenschaltung für ein Fahrrad dargestellt. Derartige Kettenumwerfer sind im Stand der Technik bekannt, so daß eine detaillierte Beschreibung nicht erforderlich ist. Der Kettenumwerfer 86 weist wiederum zwei relativ zueinander zu bewegende Bauelemente A,B auf, wobei das Bauelement A wiederum einen ersten Befestigungsabschnitt 88 aufweist, in welchen der Nehmerzylinder 1 mit seinem Ansatz 14 in analoger Weise zur Fig. 3 z.B. eingesteckt werden kann. Am zweiten Bauelement B ist wiederum eine Klemmschraube 90 vorgesehen, mittels welcher das Zugseil 25 am Bauelement B festgelegt ist.

Bei Betätigung des Betätigungshebels 1b (Fig. 1) werden wiederum aufgrund der Relativbewegung zwischen dem Ansatz 14 des Nehmerzylinders 1 und dem Zugseil 25 die Bauelemente A und B aufeinander zu bewegt. Aufgrund des an sich bekannten Anlenkungsmechanismus derartiger Kettenumwerfer wird dann ein Kettenführungsabschnitt 92 seitlich verschwenkt, d.h. orthogonal zur Zeichenebene in Fig. 4, was zum Umschalten zwischen verschiedenen Gangstufen führt.

Bei derartigen Kettenumwerfern ist insbesondere bei Schaltungen mit z.B. 7 oder 8 Zahnrädern an einer Hinterradnabe ein großer seitlicher Weg des Kettenführungsteils 92 erforderlich. Dies kann in zur Fig. 3 analoger Weise dadurch erreicht werden, daß die Kolbenringfläche 40' im Nehmerzylinder kleiner ausgebildet ist, als die Querschnittsfläche des Kolbens 1c im Geberzylinder 1a. Somit wird der bei Betätigung des Betätigungshebels 1b bewirkte Hub des Kolbens 1c aufgrund des Flächenverhältnisses übersetzt. Dabei wird zwar die Betätigungskraft des Nehmerzylinders 1 gegenüber der Eingangskraft im Geberzylinder 1a verringert. Derartige Kettenumwerfer 86 erfordern jedoch keinen großen Kraftaufwand.

Alternativ zum Einstecken des Anstatzes 14 des Nehmerzylinders 1 jeweils in die Befestigungsabschnitte 74,88 der Felgenbremse 72 bzw. des Kettenumwerfers 86 ist es auch möglich, am Ansatz 14 ein Außengewinde 94 (Fig. 1) vorzusehen und jeweils in den Öffnungen in den Befestigungsabschnitten 74 bzw. 88 ein Innengewinde zum Einschrauben des Ansatzs 14 in den jeweiligen Befestigungsabschnitt vorzusehen. Der Nehmerzylinder 1 kann somit am Befestigungsabschnitt in seiner Position relativ zum jeweiligen Hebelarm einstellbar angebracht werden und kann z.B. durch eine Kontermutter gegen selbsttätiges Lösen vom jeweiligen Befestigungsabschnitt gesichert werden. Es kann somit die Position des Nehmerzylinders relativ zu dem jeweiligen Bauelement eingestellt werden, wodurch auch die Lage der beiden zu betätigenden Bauelemente zueinander justiert werden kann.

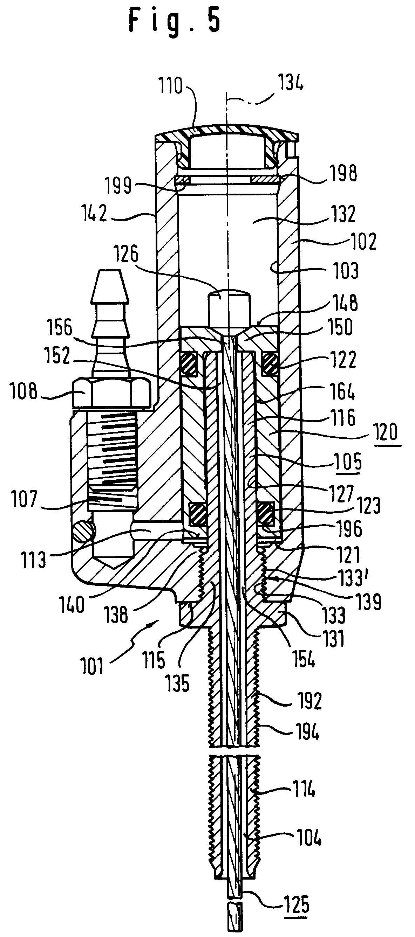

In Fig. 5 ist eine zweite Ausführungsform des erfindungsgemäßen Nehmerzylinders dargestellt. Zu den Bauteilen in Fig. 1 analoge Bauteile sind hier mit den gleichen Bezugszeichen, jeweils erhöht um die Zahl 100, bezeichnet. Es wird im nachfolgenden lediglich auf die zur Fig. 1 abweichende Ausführung des Führungsteils 105 und des Ansatzes 114 eingegangen. Der sonstige Aufbau des Nehmerzylinders 101 entspricht im wesentlichen dem Aufbau des Nehmerzylinders 1, so daß zu dessen Aufbau auf die Ausführungen zur Fig. 1 und 2 verwiesen wird.

Wie in Fig. 5 zu erkennen ist, ist im Zylinderboden 138 eine Durchgangsöffnung 139 vorgesehen, die einen deutlich größeren Querschnitt aufweist, als die Durchgangsöffnung 54 des Zylinderbodens 38 der Fig. 1. An einer Innenumfangsfläche der Öffnung 139 ist ein Innengewinde 133' vorgesehen. Das Führungselement 105 weist einen Abschnitt 135 mit Außengewinde 133 auf, mit welchem Abschnitt 135 das Führungselement 105 in die Durchgangsöffnung 139 mit dem Innengewinde 133' eingeschraubt wird. Der Abschnitt 135 bildet somit einen Teil des Zylinderbodens 138.

Ferner ist am Führungselement 105 ein ringartiger Radialvorsprung 131 vorgesehen, welcher beim Einschrauben des Führungselements 105 in die Öffnung 139 zur Anlage an einem Schraubanschlag 115 kommt. Somit wird das Führungsteil 105 mit dem einen Teil des Zylinderbodens bildenden Abschnitt 135 jeweils bis zu einer durch den Radialvorsprung 131 und den Schraubanschlag 115 gebildeten definierten Endstellung eingeschraubt. Dadurch wird bei deutlich erleichterter Montage die Montagegenauigkeit des Nehmerzylinders 101 erhöht.

In seinem sich außerhalb der Innenausnehmung 132 bzw. der Durchgangsöffnung 139 erstreckenden Abschnitt 192 ist das Führungselement 105 einteilig mit dem Ansatz 114 ausgebildet. Mittels des Ansatzes 114 kann der Nehmerzylinder 101, wie mit Bezug auf die Fig. 3 und 4 beschrieben, am jeweiligen Bauelement angebracht werden.

Der Ansatz 114 in Fig. 5 weist ein Außengewinde 194 auf. Mit dem Außengewinde 194 kann der Ansatz 114 z.B. in eine Durchgangsöffnung eines Befestigungsabschnitts mit Innengewinde eingeschraubt werden. Durch das Vorsehen einer in den Fig. nicht dargestellten Kontermutter kann dann durch Drehen des Ansatzes 114 in der (nicht dargestellten) Durchgangsöffnung der gesamte Nehmerzylinder 101 in seiner Lage relativ zum Befestigungsabschnitt eingestellt und durch die Kontermutter in jeder gewünschten Position festgelegt werden. Es ist somit eine Justage der Grundstellung der zueinander zu bewegenden Bauelemente möglich. Wie in Fig. 5 ferner zu erkennen ist, ist der Dichtungsring 123 in einer Umfangsnut 196 in der Innenumfangsfläche 164 der Innenausnehmung 127 im Kolben 120 angeordnet. Somit sind beide Dichtungsringe 122,123 am Kolben 120 vorgesehen.

Ferner ist im Bereich des Endes 142 des Zylindergehäuseteils 102 in der Innenumfangsfläche 103 der Innenausnehmung 132 eine Umfangsnut 198 vorgesehen, in welcher ein Sprengring 199 angeordnet ist. Der Sprengring 199 bildet einen Hubbegrenzungsanschlag für den Kolben 120, so daß der Kolben sich nicht soweit verschieben kann, daß er vom Führungselement 105 abgezogen wird.

Wie in Fig. 5 ferner zu erkennen ist, ist an der Stirnseite 140 des Kolbens 120 kein dem Ringvorsprung 72 in Fig. 1 entsprechender Ringvorsprung vorgesehen. In der in Fig. 5 dargestellten untersten Kolbenstellung ergibt sich ein Restvolumen der zwischen Zylinderboden 138 und Kolben 120 gebildeten Druckkammer 121, weil die Länge des sich in die Zylinderausnehmung 132 erstreckenden Führungsabschnitts 116 größer ist, als die Länge der Innenausnehmung 127 im Kolben 120. Der Kolbenboden 150 liegt in dieser Kolbenstellung am Führungsabschnitt 116 an, wodurch die Weiterbewegung des Kolbens 120 in Richtung zum Zylinderboden 138 hin blockiert ist.

Die Ausführungsform der Fig. 5 weist den Vorteil auf, daß das Führungselement 105 mit dem Bodenabschnitt 135 und dem Ansatz 114 als separates Teil gefertigt werden kann und somit für das Führungselement 105 ein anderes Material verwendet werden kann, als für das Zylindergehäuseteil 102. Auf den Ansatz 114 wirken äußere Kräfte ein, so daß es vorteilhaft ist, diesen aus härterem Material zu fertigen, als das Zylindergehäuseteil 102. Zum Beispiel kann das Führungselement 105 mit dem Bodenabschnitt 135 und dem Ansatz 114 aus Stahl und das Zylindergehäuseteil aus Leichtmetall, wie z.B. Aluminium, gefertigt werden. Das Gesamtgewicht des erfindungsgemäßen Nehmerzylinders ist bei ausreichender Stabilität relativ gering.

Durch das Vorsehen des Dichtungsrings 123 am Kolben 120 müssen am Führungselement 105 keine Vorkehrungen zum Anbringen eines derartigen Dichtungsrings getroffen werden, so daß die Fertigung des aus härterem Material bestehenden Führungselements 105 vereinfacht werden kann.

Die erfindungsgemäße hydraulische Betätigungseinrichtung ermöglicht die Verwendung ein und derselben Betätigungseinrichtung bei verschiedenen zu betätigenden Einrichtungen. Derartige zu betätigende Einrichtungen umfassen zum Beispiel Schaltungen oder Bremsen von Fahrrädern. Der Nehmerzylinder der erfindungsgemäßen hydraulischen Betätigungseinrichtung kann in einfacher Weise an den jeweiligen zu betätigenden Einrichtungen angebracht werden, wobei die Art der Anbringung im wesentlichen der Anbringung eines bisher verwendeten Bowdenzugmantels entspricht. Somit ist auch die Verwendung der erfindungsgemäßen Betätigungseinrichtung bei bereits z.B. an einem Fahrrad installierten Bremsen oder Gangschaltungen möglich. Dies wird zusätzlich durch die Anordnung der Druckleitung und des Ansatzes bzw. des Zugseils jeweils im Bereich des Nehmerzylinders in axialer Richtung des Nehmerzylinders unterstützt. Die Druckleitung kann ggf. mit den für einen Bowdenzug vorgesehenen Befestigungselementen am Zweirad-Rahmen festgelegt werden. Es jedoch auch möglich, die Druckleitung unter einem von 180° verschiedenen Winkel bezüglich des Zugseils vom Zylindergehäuseteil wegzuführen.

Der in den Fig. 1 - 5 dargestellte und vorstehend im einzelnen beschriebene Nehmerzylinder 1 bzw. 101 kann auch ohne weiteres als Geberzylinder in einer Betätigungseinrichtung eingesetzt werden, insbesondere anstelle des Geberzylinders 1a in Fig. 1. Hierzu ist lediglich der entsprechende Betätigungsgriff über das Zugseil mit dem Kolben 20 bzw. 120 zu verbinden mit entsprechender Anlenkung des Betätigungsgriffs am Lenker derart, daß bei Betätigung des Griffs das Zugseil auf Zug beansprucht wird.

Da für eine Vielzahl von Anwendungen ein und derselbe Nehmerzylinder verwendet werden kann, können aufgrund der Massenproduktion die Kosten zur Herstellung der erfindungsgemäßen Betätigungseinrichtung deutlich verringert werden.

Aufgrund der Auswahl der effektiven Querschnittsflächen der Kolben des Nehmerzylinders und des Geberzylinders kann die hydraulische Betätigungseinrichtung in einfacher Weise an verschiedene Erfordernisse angepaßt werden, welche z.B. eine große Ausgangskraft des Nehmerzylinders bei kleinem Hub oder eine relativ kleine Ausgangskraft des Nehmerzylinders bei großem Hub umfassen können.

Die Verwendung der erfindungsgemäßen Betätigungseinrichtung ermöglicht ferner, daß z.B. an einem Fahrrad die bisher verwendeten Bowdenzugübertragungen weitgehend durch die Druckleitungen der Betätigungseinrichtung ersetzt werden, was die insbesondere bei der Vielzahl von Umlenkungen auftretenden Reibungskraftverluste der Bowdenzugeinrichtungen beseitigt. Die durch die erfindungsgemäße Betätigungseinrichtung betätigten Einrichtungen zeigen somit bei deutlich geringer Betätigungskraft eine erheblich verbesserte bzw. verstärkte Wirkung (z.B. Bremswirkung) bei großer Zuverlässigkeit auch nach längerer Nutzungsdauer.

## Patentansprüche

1. Kolben-Zylindereinheit für eine Druckfluid-Betätigungseinrichtung, insbesondere an Zweirädern zur Abgabe eines unter Druck stehenden Fluids aufgrund einer Relativbewegung zweier manuell betätigbarer Bauelemente, insbesondere der Druckfluid-Betätigungseinrichtung, oder zur Aufnahme dieses Fluids und mechanischen Betätigung zweier relativ zueinander zu bewegender Bauelemente (A, B), insbesondere des Zweirads, umfassend:
- ein Zylindergehäuseteil (2; 102) mit einer eine Zylinderlängsachse (34; 134) festlegenden Zylinderausnehmung (32; 132), wobei die Zylinderausnehmung (32; 132) an einem ihrer axialen Enden durch einen Zylinderboden (38; 138) abgeschlossen ist,
- einen in der Zylinderausnehmung (32; 132) axial verschiebbaren Kolben (20; 120),
- eine zwischen einer dem Zylinderboden (38; 138) zugewandten Stirnseite (40; 140) des Kolbens (20; 120) und dem Zylinderboden (38; 138) gebildete Druckkammer (21; 121) und
- eine in die Druckkammer (21; 121) mündende Druckleitung (7, 13; 107, 113) zum Zuführen von Arbeitsfluid in die Druckkammer (21; 121) und zum Ablassen von Arbeitsfluid aus der Druckkammer (21; 121), wobei das Zylindergehäuseteil (2; 102) mit einem ersten (A) der beiden Bauelemente (A, B) betriebsmäßig verbindbar ist und der Kolben (20; 120) mit einem zweiten (B) der beiden Bauelemente (A, B) betriebsmäßig verbindbar ist,
wobei eine den Zylinderboden (38; 138) durchsetzende Durchgangsöffnung (54; 154) vorgesehen ist und wobei die Durchgangsöffnung (54; 154) von einem mit dem Kolben (20; 120) einerseits und dem zweiten Bauelement (B) andererseits verbundenen Zugelement (25; 125) durchsetzt ist,
**dadurch gekennzeichnet,**
daß der Kolben (20; 120) parallel zur Zylinderlängsachse (34; 134) eine zum Zylinderboden (38; 138) hin offene Innenausnehmung (27; 127) aufweist, welche an einem vom Zylinderboden (38; 138) abgewandten Ende der Innenausnehmung (27; 127) durch einen Kolbenboden (50; 150) des Kolbens (20; 120) abgeschlossen ist,
daß am Zylinderboden (38; 138) ein zur Zylinderlängsachse (34, 134) paralleles Führungselement (5; 105) mit einem über den Zylinderboden (38; 138) vorstehenden und in die Innenausnehmung (27; 127) hineinragenden Führungsabschnitt (16; 116) angeordnet ist, wobei die Abmessung des Führungsabschnitts (16; 116) parallel zur Zylinderlängsachse (34; 134) größer ist, als ein maximaler Hub des Kolbens (20; 120) in der Zylinderausnehmung (32; 132), und
daß das Führungselement (5; 105) eine mit der Durchgangsöffnung (54; 154) im Zylinderboden (38; 138) fluchtende Durchgangsöffnung (52; 152) aufweist, wobei das Zugelement (25, 125) ferner die Durchgangsöffnung (52; 152) im Führungselement (27; 127) durchsetzt.

2. Kolben-Zylindereinheit nach Anspruch 1,
dadurch gekennzeichnet,
daß das Zugelement (25;125) ein Zugseil (25;125) ist.

3. Kolben-Zylindereinheit nach Anspruch 1 oder 2,
dadurch gekennzeichnet,
daß der Kolbenboden (50;150) eine mit der Durchgangsöffnung (50;150) im Führungselement (5;105) fluchtende Durchgangsöffnung (56;156) aufweist,
daß die Durchgangsöffnung (56;156) im Kolbenboden auf einer vom Zylinderboden (38;138) abgewandten Stirnseite (48;148) des Kolbens (20;120) einen Abschnitt (58) mit vergrößertem Durchmesser aufweist, und
daß ein mit dem Kolben (20;120) gekoppeltes Ende des Zugselements (25;125) einen Abschnitt (26;126) mit vergrößertem Durchmesser aufweist, welcher wenigstens teilweise in dem Abschnitt (58) vergrößerten Durchmessers der Durchgangsöffnung (56;156) im Kolbenboden (50;150) angeordnet ist.

4. Kolben-Zylindereinheit nach einem der Ansprüche 1 bis 3,
dadurch gekennzeichnet,
daß das Führungselement (105) mit einem wenigstens einen Teil des Zylinderbodens (138) bildenden Bodenabschnitt (135) einteilig ausgebildet ist.

5. Kolben-Zylindereinheit nach Anspruch 4,
dadurch gekennzeichnet,
daß im Zylindergehäuseteil (2;102) eine Öffnung (139) mit Innengewinde (133') vorgesehen ist, und daß am Bodenabschnitt (135) ein Außengewinde (133) zum Einschrauben des Bodenabschnitts (135) in das Zylindergehäuseteil (102) vorgesehen ist.

6. Kolben-Zylindereinheit nach Anspruch 5,
dadurch gekennzeichnet,
daß an dem Bodenabschnitt (135) ein sich radial nach außen erstreckender Einschraubbegrenzungsanschlag (131) vorgesehen ist.

7. Kolben-Zylindereinheit nach einem der Ansprüche 1 bis 6,
dadurch gekennzeichnet,
daß an der Außenseite des Zylinderbodens (38;138) ein Anschlußelement (14;114) vorgesehen ist zur Kopplung des Zylindergehäuseteils (2;102) mit dem ersten Bauelement (A).

8. Kolben-Zylindereinheit nach Anspruch 7,
dadurch gekennzeichnet,
daß das Anschlußelement (14;114) einen sich in Richtung der Zylinderlängsachse erstreckenden Ansatz (14;114) umfaßt, welcher eine mit der Durchgangsöffnung (54;154) im Zylinderboden (38;138) fluchtende Durchgangsöffnung (4;104) aufweist, und daß das Zugelement (25;125) die Durchgangsöffnung (4;104) des Anschlußelements (14;114) durchsetzt und direkt mit dem zweiten Bauelement (B) gekopppelt ist.

9. Kolben-Zylindereinheit nach Anspruch 7 oder 8,
dadurch gekennzeichnet,
daß das Anschlußelement (114) mit dem Zylinderboden (135) einteilig ausgebildet ist.

10. Kolben-Zylindereinheit nach einem der Ansprüche 7 bis 9,
dadurch gekennzeichnet,
daß ein Bowdenzug-Mantelteil am Anschlußelement mit einem seiner Enden festgelegt ist und am ersten Bauelement (A) mit seinem anderen Ende festgelegt ist, und daß das Zugelement das Bowdenzug-Mantelteil durchsetzt und eine Bowdenzugseele bildet.

11. Kolben-Zylindereinheit nach einem der Ansprüche 7 bis 9,
dadurch gekennzeichnet,
daß das Zylindergehäuseteil (2) mittels des Anschlußelements (14) am ersten Bauelement (A) in einer Stecköffnung (76) an einem ersten Befestigungsabschnitt (74;88) des ersten Bauelements (A) steckbar gelagert ist, wobei das erste Bauelement (A) an einem Steckanschlag (15;115) im Bereich des Zylinderbodens (38;138) anliegt.

12. Kolben-Zylindereinheit nach einem der Ansprüche 7 bis 9,
dadurch gekennzeichnet,
daß am Anschlußelement (114) ein Außengewinde (194) vorgesehen ist, und daß an einem Befestigungsabschnitt des ersten Bauelements (A) eine Öffnung mit Innengewinde zur Schraubverbindung des Anschlußelements mit dem ersten Bauelement (A) vorgesehen ist.

13. Kolben-Zylindereinheit nach einem der Ansprüche 7 bis 12,
dadurch gekennzeichnet,
daß an der dem Zylinderboden (38) zugewandten Stirnseite (46) des Kolbens (20) und/oder am Zylinderboden ein die Innenausnehmung (27) im Kolben (20) umgebender, von der Stirnseite (40) des Kolbens (20) axial vorstehender Ringvorsprung (72) vorgesehen ist.

14. Kolben-Zylindereinheit nach einem der Ansprüche 1 bis 13,
dadurch gekennzeichnet,
daß der Führungsabschnitt (116) eine Abmessung parallel zur Zylinderlängsachse aufweist, die größer ist als die axiale Abmessung der Innenausnehmung im Kolben (120).

15. Kolben-Zylindereinheit nach einem der Ansprüche 1 bis 14,
dadurch gekennzeichnet,
daß in einer Außenumfangsfläche (60) des Kolbens (20) eine in Umfangsrichtung verlaufende Nut (62) zur Aufnahme eines ersten Dichtungselements (22) vorgesehen ist.

16. Kolben-Zylindereinheit nach einem der Ansprüche 1 bis 15,
dadurch gekennzeichnet,
daß in einer Innenumfangsfläche (164) der Innenausnehmung (127) im Kolben (120) und/oder in einer Außenumfangsfläche (66) des Führungselements (5) eine in Umfangsrichtung verlaufende Nut (196;60) zur Aufnahme eines zweiten Dichtungselements (123;23) vorgesehen ist.

17. Kolben-Zylindereinheit nach einem der Ansprüche 1 bis 16,
dadurch gekennzeichnet,
daß im Bereich eines offenen Endes der Zylinderausnehmung (132) im Zylindergehäuseteil (102) ein Hubbegrenzungselement (199) für den Kolben (120) vorgesehen ist.

18. Kolben-Zylindereinheit nach Anspruch 17,
dadurch gekennzeichnet,
daß in einer Innenumfangsfläche (103) der Zylinderausnehmung (132) im Zylindergehäuseteil (102) im Bereich des offenen Endes der Zylinderausnehmung (132) eine in Umfangsrichtung verlaufende Nut (198) zur Aufnahme eines Sprengrings (199) vorgesehen ist.

19. Verwendung der Kolben-Zylindereinheit nach einem der Ansprüche 1 bis 18 in einer hydraulischen Betätigungseinrichtung, insbesondere an Zweirädern, zur Betätigung zweier relativ zueinander zu bewegender Bauelemente, insbesondere einer Bremse oder einer Schaltung.

## Claims

1. A piston-cylinder unit for a pressurised fluid actuating device, particularly on two-wheeled vehicles, for delivering a fluid under pressure by reason of a relative movement between two manually operated components, particularly of the pressurised fluid actuating device, or for receiving this fluid and mechanically actuating two components (A, B), particularly of the two-wheeled vehicle, which are adapted for movement relatively to each other, comprising:
- a cylinder housing part (2; 102) with, establishing a longitudinal axis (34; 134) through the cylinder, a cylinder chamber (32; 132), the cylinder chamber (32; 132) being closed at one of its axial ends by a cylinder bottom (38; 138),
- a piston (20; 120) adapted for axial displacement in the cylinder chamber (32; 132),
- a pressure chamber (21; 121) formed between the cylinder bottom (38; 138) and that face (40; 140) of the piston (20; 120) which faces the cylinder bottom (38; 138) and
- a pressure line (7, 13; 107, 113) which opens out into the pressure chamber (21; 121) and which is intended to convey working fluid to the pressure chamber (21; 121) and to bleed off working fluid from the pressure chamber (21; 121), whereby the cylinder housing part (2; 102) can be operatively connected to a first (A) of the two components (A, B) while the piston (20; 120) can be operatively connected to a second (B) of the two components (A, B),
wherein a port (54; 154) is provided which passes through the cylinder bottom (38; 138), the port (54; 154) being traversed by a traction element (25; 125) connected at one end to the piston (20; 120) and to the second component (B) at the other,
characterised in that,
the piston (20; 120) comprises, parallel with the longitudinal axis (34; 134) of the cylinder and interior recess (27; 127) which is open towards the cylinder bottom (38; 138) and which, at the end of the interior recess (27; 127) which is remote from the cylinder bottom (38; 138) is occluded by a piston bottom (50; 150) of the piston (20; 120) and in that there is on the cylinder bottom (38; 138) and parallel with the longitudinal axis (34; 134) of the cylinder a parallel guide element (5; 105) with a guide portion (16; 116) projecting beyond the cylinder bottom (38; 138) and into the interior recess (27; 127), the dimensions of the guide portion (16; 116) being, parallel with the longitudinal axis (34; 134) through the cylinder, greater than a maximum stroke of the piston (20; 120) in the cylinder chamber (32; 132) and in that the guide element (5; 105) comprises a port (52; 152) aligned with the port (54; 154) in the cylinder bottom (38; 138), the traction element (25; 125) further traversing the port (52; 152) in the guide element (27; 127).

2. A piston-cylinder unit according to Claim 1, characterised in that the traction element (25; 125) is a traction cable (25; 125).

3. A piston-cylinder unit according to Claim 1 or 2, characterised in that the piston bottom (50; 150) comprises a port (56; 156) aligned with the port (50; 150) in the guide element (5; 105), and in that the port (56; 156) in the piston bottom comprises a portion (58) of enlarged diameter on an end face (48; 148) of the piston (20; 120) which is remote from the cylinder bottom (38; 138) and in that an end of the traction element (25; 125) which is coupled to the piston (20; 120) has a portion (26; 126) of enlarged diameter which is disposed at least partly in the enlarged-diameter portion (58) of the port (56; 156) in the piston bottom (50; 150).

4. A piston-cylinder unit according to one of Claims 1 to 3, characterised in that the guide element (105) is constructed in one piece with a bottom section (135) which constitutes at least a part of the cylinder bottom (138).

5. A piston-cylinder unit according to Claim 4, characterised in that an opening (139) with an internal screw thread (133') is provided in the cylinder housing part (2; 102) and in that in the bottom portion (135) there is an external screw thread (133) for screwing the bottom portion (135) into the cylinder housing part (102).

6. A piston-cylinder unit according to Claim 5, characterised in that a radially outwardly extending screw-in limiting abutment (131) on the bottom portion (135).

7. A piston-cylinder unit according to one of Claims 1 to 6, characterised in that there is on the outside of the cylinder bottom (38; 138) a connecting element (14; 114) for coupling the cylinder housing part (2; 102) to the first component (A).

8. A piston-cylinder unit according to Claim 7, characterised in that the connecting element (14; 114) comprises, extending in the direction of the longitudinal axis of the cylinder a neck (14; 114) which has a port (4; 104) aligned with the port (54; 154) in the cylinder bottom (38; 138) and in that the traction element (25; 125) passes through the port (4; 104) in the connecting element (14; 114) and is directly coupled to the second component (B).

9. A piston-cylinder unit according to Claim 7 or 8, characterised in that the connecting element (114) is constructed in one piece with the cylinder bottom (135).

10. A piston-cylinder unit according to one of Claims 7 to 9, characterised in that a sheath part of a Bowden cable has one end fixed to the connecting element while its other end is fixed to the first component (A) and in that the traction element passes through the sheath part of the Bowden cable and forms the core of the Bowden cable.

11. A piston-cylinder unit according to one of Claims 7 to 9, characterised in that the cylinder housing part (2) is mounted so that it can be pushed into an opening (76) on a first fixing portion (74; 88) of the first component (A) by means of the connecting element (14) on the first component (A), the first component (A) bearing on an abutment surface (15; 115) in the region of the cylinder bottom (38; 138).

12. A piston-cylinder unit according to one of Claims 7 to 9, characterised in that an external screw thread (194) is provided on the connecting element (114) and in that on a fixing portion of the first component (A) there is an opening with an internal screw thread for providing a screw connection between the connecting element and the first component (A).

13. A piston-cylinder unit according to one of Claims 7 to 12, characterised in that an annular projection (72) on the end face (46) of the piston (20) which faces the cylinder bottom (38) and/or on the cylinder bottom, said annular projection surrounding the interior recess (27) in the piston (20) and projecting axially from the end face (40) of the piston (20).

14. A piston-cylinder unit according to one of Claims 1 to 13, characterised in that the guide portion (116) has parallel with the longitudinal axis through the cylinder a dimension which is greater than the axial dimension of the interior recess in the piston (120).

15. A piston-cylinder unit according to one of Claims 1 to 14, characterised in that in an external peripheral surface (60) of the piston (20) there is extending in a peripheral direction a groove (62) to receive a first sealing element (22).

16. A piston-cylinder unit according to one of Claims 1 to 15, characterised in that in an inner peripheral surface (164) of the interior chamber (127) in the piston (120) and/or in an outer peripheral surface (66) of the guide element (5) there is, extending in the peripheral direction, a groove (196; 60) to receive a second sealing element (123; 23).

17. A piston-cylinder unit according to one of Claims 1 to 16, characterised in that a stroke limiting element (199) for the piston (120) is provided in the region of an open end of the cylinder chamber (132) in the cylinder housing part (102).

18. A piston-cylinder unit according to Claim 17, characterised in that in an inner peripheral surface (103) of the cylinder chamber (132) in the cylinder housing part (102) there is in the region of the open end of the cylinder chamber (132) and extending in the peripheral direction a groove (198) to receive a snap ring (199).

19. Use of the piston-cylinder unit according to one of Claims 1 to 18 in an hydraulic actuating device, particularly on two-wheeled vehicles, for actuating two components adapted for movement relatively to each other, particularly two components of a brake or of a gear shift device.

## Revendications

1. Unité à cylindre et piston pour un dispositif d'actionnement à fluide sous pression, en particulier sur des deux-roues, pour la distribution d'un fluide sous pression, sur la base d'un déplacement relatif de deux composants à actionner manuellement, en particulier du dispositif d'actionnement à fluide sous pression, ou pour recevoir ce fluide et pour l'actionnement mécanique de deux composants (A, B) à déplacer l'un par rapport à l'autre, en particulier du deux roues, comportant :
- un boîtier de cylindre (2 ; 102) comportant un évidement de cylindre (32 ; 132), définissant un axe longitudinal de cylindre (34 ; 134), l'évidement de cylindre (32 ; 132) étant fermé à l'une de ses extrémités axiales par un fond de cylindre (38 ; 138),
- un piston (20 ; 120) pouvant coulisser axialement dans l'évidement de cylindre (32 ; 132),
- une chambre de pression (21 ; 121), formée entre un côté frontal (40 ; 140) tourné vers le fond de cylindre (38,138), du piston (20 ; 120) et le fond de cylindre (38,138) et
- une conduite de pression (7, 13 ; 107, 113), débouchant dans la chambre de pression (21 ; 121), pour l'envoi de fluide de travail dans la chambre de pression (21 ; 121) et pour l'évacuation de fluide de travail hors de la chambre de pression (21 ; 121), la partie de boîtier de cylindre (2 ; 102) pouvant être reliée en fonctionnement avec un premier (A) des deux composants (A, B) et le piston (20 ; 120) pouvant être relié en fonctionnement avec un second (B) des deux composants (A, B),
une ouverture de passage (54 ; 154) traversant le fond de cylindre (38 ; 138) étant prévue et l'ouverture de passage (54 ; 154) étant traversée par un élément de traction (25 ; 125) relié d'une part avec le piston (20 ; 120) et d'autre part avec le second composant (B),
caractérisée en ce que le piston (20 ; 120) présente, parallèlement à l'axe longitudinal de cylindre (34 ; 134), un évidement intérieur (27 ; 127) ouvert vers le fond de cylindre (38 ; 138), évidement qui à une extrémité, tournée à l'opposé du fond de cylindre (38 ; 138), de l'évidement intérieur (27 ; 127), est fermé par un fond de piston (50 ; 150) du piston (20 ; 120),
en ce que sur le fond de cylindre (38 ; 138) est placé un élément de guidage (5 ; 105), parallèle à l'axe longitudinal de cylindre (34 ; 134), avec une portion de guidage (16 ; 116) dépassant du fond de cylindre (38 ; 138) et s'engageant dans l'évidement intérieur (27 ; 127), la dimension de la portion de guidage (16 ; 116), parallèlement à l'axe longitudinal de cylindre (34 ; 134), étant supérieure à une course maximale du piston (20 ; 120) dans l'évidement de cylindre (32 ; 132), et
en ce que l'élément de guidage (5 ; 105) présente une ouverture de passage (52 ; 152) alignée avec l'ouverture de passage (54 ; 154) dans le fond de cylindre (38 ; 138), l'élément de traction (25 ; 125) traversant en outre l'ouverture de passager (52 ; 152) dans l'élément de guidage (27 ; 127).

2. Unité à cylindre et piston selon la revendication 1,
caractérisée
en ce que l'élément de traction (25 ; 125) est un câble de traction (25 ; 125).

3. Unité à cylindre et piston selon la revendication 1 ou 2,
caractérisée
en ce que le fond de piston (50 ; 150) présente une ouverture de passage (56 ; 156) alignée avec l'ouverture de passage (50 ; 150) dans l'élément de guidage (5 ; 105), en ce que l'ouverture de passage (56 ; 156) dans le fond de piston présente, sur un côté frontal (48 ; 148) tourné à l'opposé du fond de cylindre (38 ; 138), une portion (58) de diamètre agrandi et
en ce qu'une extrémité, accouplée au piston (20 ; 120), de l'élément de traction (25 ; 125), présente une portion (26 ; 126) de diamètre agrandi, qui est placée au moins en partie dans la portion (58) de diamètre agrandi de l'ouverture de passage (56 ; 156) dans le fond de piston (50 ; 150).

4. Unité à cylindre et piston selon l'une des revendications 1 à 3,
caractérisée
en ce que l'élément de guidage (105) est formé d'une seule pièce avec une portion de fond formant au moins une partie du fond de cylindre (138).

5. Unité à cylindre et piston selon la revendication 4,
caractérisée
en ce que dans la partie de boitier de cylindre (2 ; 102) est prévue une ouverture (139) avec taraudage (133'), et en ce que sur la portion de fond (135) est prévu un filetage extérieur (133) pour le vissage de la portion de fond (135) dans la partie de boîtier de cylindre (102).

6. Unité à cylindre et piston selon la revendication 5,
caractérisée
en ce que sur la portion de fond (135) est prévue une butée de limitation de vissage (131), s'étendant radialement vers l'extérieur.

7. Unité à cylindre et piston selon l'une des revendications 1 à 6,
caractérisée
en ce que sur le côté extérieur du fond de cylindre (38 ; 138) est prévu un élément de raccord (14 ; 114) pour l'accouplement de la partie de boîtier de cylindre (202) avec le premier composant (A).

8. Unité à cylindre et piston selon la revendication 7,
caractérisée
en ce que l'élément de raccord (14 ; 114) comporte un appendice (14 ; 114) s'étendant dans la direction de l'axe longitudinal du cylindre, qui présente une ouverture de passage (4 ; 104) alignée avec l'ouverture de passage (54 ; 154) dans le fond de cylindre (38 ; 138), et en ce que l'élément de traction (25 ; 125) traverse l'ouverture de passage (4 ; 104) de l'élément de raccord (14 ; 114) et est directement accouplé avec le second composant (B).

9. Unité à cylindre et piston selon la revendication 7 ou 8,
caractérisée
en ce que l'élément de raccord (114) est formé d'une seule pièce avec le fond de cylindre (135).

10. Unité à cylindre et piston selon l'une des revendications 7 à 9,
caractérisée
en ce qu'une partie d'enveloppe de câble Bowden est fixée sur l'élément de raccord avec l'une de ses extrémités et est fixée sur le premier composant (A) avec son autre extrémité, et en ce que l'élément de traction traverse la partie d'enveloppe de câble Bowden et forme une âme de câble Bowden.

11. Unité à cylindre et piston selon l'une des revendications 7 à 9,
caractérisée
en ce que le boîtier de cylindre (2) est monté de manière à pouvoir être emboîtée, au moyen de l'élément de raccord (14) sur le premier composant (A), dans une ouverture d'emboîtement (76) sur une première portion de fixation (74 ; 88) du premier composant (A), le premier composant (A) s'appliquant contre une butée d'emboîtement (15 ; 115) dans la région du fond de cylindre (38 ; 138).

12. Unité à cylindre et piston selon l'une des revendications 7 à 9,
caractérisée
en ce que sur l'élément de raccord (114) est prévu un filetage extérieur (194), et en ce que sur une portion de fixation du premier composant (A) est prévue une ouverture avec taraudage pour l'assemblage vissé de l'élément de raccord avec le premier composant (A).

13. Unité à cylindre et piston selon l'une des revendications 7 à 12,
caractérisée
en ce que sur le côté frontal (46), tourné vers le fond de cylindre (38), du piston (20) et/ou sur le fond de cylindre (38 ; 138) il est prévu une saillie annulaire (72) dépassant axialement du côté frontal (40) du piston (20), entourant l'évidement intérieur (27) dans le piston (20).

14. Unité à cylindre et piston selon l'une des revendications 1 à 13,
caractérisée
en ce que la portion de guidage (116) présente une dimension parallèlement à l'axe longitudinal du cylindre, qui est supérieure à la dimension axiale de l'évidement intérieur dans le piston (120).

15. Unité à cylindre et piston selon l'une des revendications 1 à 14,
caractérisée
en ce que dans une surface périphérique extérieure (60) du piston (20) est prévue une rainure (62), s'étendant dans la direction périphérique, destinée à loger un premier élément d'étanchéité (22).

16. Unité à cylindre et piston selon l'une des revendications 1 à 15,
caractérisée
en ce que dans une surface périphérique intérieure (164) de l'évidement intérieur (127) dans le piston (120) et/ou dans une surface périphérique extérieure (66) de l'élément de guidage (5), il est prévu une rainure (196 ; 60), s'étendant dans la direction périphérique, destinée à loger un second élément d'étanchéité (123 ; 23).

17. Unité à cylindre et piston selon l'une des revendications 1 à 16,
caractérisée
en ce que dans la zone d'une extrémité ouverte de l'évidement de cylindre (132) dans le boîtier de cylindre (102), il est prévu un élément de limitation de course (199) pour le piston (120).

18. Unité à cylindre et piston selon la revendication 17,
caractérisée
en ce que dans une surface périphérique intérieure (103) de l'évidement de cylindre (132) dans le boîtier de cylindre (102) il est prévu, dans la zone de l'extrémité ouverte de l'évidement de cylindre (132), une rainure (198) s'étendant dans la direction périphérique, destinée à loger un anneau élastique (199).

19. Utilisation de l'unité à cylindre et piston selon l'une des revendications 1 à 18 dans un dispositif d'actionnement hydraulique, en particulier sur des deux-roues, pour l'actionnement de deux composants, à déplacer l'un par rapport à l'autre, en particulier d'un frein ou d'un dérailleur.
